Europäisches Patentamt

European Patent Office

Office européen des brevets

(19)

(11) Veröffentlichungsnummer: **0 021 015**
**B1**

(12) **EUROPÄISCHE PATENTSCHRIFT**

(45) Veröffentlichungstag der Patentschrift:
28.07.82

(21) Anmeldenummer: 80102720.2

(22) Anmeldetag: 16.05.80

(51) Int. Cl.³: **C 09 D 3/727**, C 08 L 33/00,
C 09 D 5/40, C 25 D 13/06

(54) Lackbindemittel und ihre Verwendung für Elektrotauchlacke.

(30) Priorität: 20.06.79 DE 2924756

(43) Veröffentlichungstag der Anmeldung:
07.01.81 Patentblatt 81/1

(45) Bekanntmachung des Hinweises auf die Patenterteilung:
28.07.82 Patentblatt 82/30

(84) Benannte Vertragsstaaten:
BE DE FR GB IT NL

(56) Entgegenhaltungen:
DE-A-2 057 799
US-A-3 883 483

(73) Patentinhaber: BASF Aktiengesellschaft,
Carl-Bosch-Strasse 38, D-6700 Ludwigshafen (DE)

(72) Erfinder: Gimpel, Juergen, Dr., Osloer Weg 44,
D-6700 Ludwigshafen (DE)
Erfinder: Hartmann, Heinrich, Dr., Weinheimer
Strasse 46, D-6703 Limburgerhof (DE)
Erfinder: Schenck, Hans-Uwe, Dr., Erlenweg 6,
D-6706 Wachenheim (DE)

## Lackbindemittel und ihre Verwendung für Elektrotauchlacke

Die vorliegende Erfindung betrifft Lackbindemittel auf Basis eines tertiäre Aminogruppen und verkappte Isocyanatgruppen enthaltenden Copolymerisats und deren Verwendung für Elektrotauchlacke.

Bindemittel aus Acrylatharzen, die durch Isocyanat vernetzt werden, sind für die Elektrotauchlackierung bekannt. So beschreibt die US-A-3 883 483 eine kationisch abscheidbare Polymerzusammensetzung, die das Umsetzungsprodukt eines halbseitig verkappten Diisocyanats mit einer äthylenisch ungesättigten Hydroxylverbindung wie Hydroxyäthylacrylat enthält. Auf diese Weise ist jedoch die für die Vernetzung erforderliche Isocyanatgruppe über eine Esterbindung an die Kohlenstoffkette des Polymers gebunden. Ein Teil der Esterbindungen wird durch Hydrolyse bei der Badalterung des Elektrotauchlacks gespalten. Daduch wird die Zusammensetzung der für die Vernetzung erforderlichen Bestandteile im Laufe der Badalterung geändert. Dies führt zu einer Verschlechterung der chemischen Beständigkeit und des Korrosionsschutzes der abgeschiedenen Lacke.

Die US-A 3 694 416 beschreibt Überzugsmittel, hergestellt aus aliphatische konjugierten Dienen und verkapptem Vinylisocyanat, die mit hydroxylgruppenhaltigen Polymeren vernetzt werden. Dieses Zweikomponentensystem enthält jedoch keine für die Elektrotauchabscheidung erforderliche ionogenen Gruppen.

In der US-A-3 692 746 werden Überzugsmittel aus Vinylchlorid, verkapptem Vinylisocyanat und andere äthylenisch ungesättigten Comonomeren beschrieben, die durch Emulsionspolymerisation mit Redoxinitiatoren hergestellt werden. Diese Emulsionen eignen sich nicht als Elektrotauchlacke, da sie zu viele niedermolekulare ionogene Begleitstoffe enthalten und ihre Badleitfähigkeit zu gross ist. Dasselbe gilt für die in der BE-A-652 401 beschriebenen Polymerisate aus Acrylnitril, verkapptem Vinylisocyanat und anderen äthylenisch ungesättigten Monomeren.

Der vorliegenden Erfindung lag die Aufgabe zugrunde, Lackbindemittel, insbesondere Bindemittel für Elektrotauchlacke zu entwickeln, die eine definierte Menge an verkappten Isocyanatgruppen enthalten, die direkt an die Kohlenstoffkette des Polymeren gebunden sind, wobei im Polymermolekül gegebenenfalls weitere reaktive Gruppen enthalten sein können, so dass sie als selbst- und fremdvernetzende Bindemittel eingesetzt werden können.

In der DE-A 2 460 785 werden Bindemittel für Pulverlacke beschrieben, die verkapptes Vinylisocyanat als eines der Monomeren enthalten. Diese Polymerisate sind jedoch für die kationische Elektrotauchlackierung nicht geeignet, da sie über keine kationische Gruppierungen verfügen.

Gegenstand der vorliegenden Erfindung sind Lackbindemittel auf Basis eines tertiäre Aminogruppen und verkappte Isocyanatgruppen enthaltenden Copolymerisats, das durch zumindest teilweise Salzbildung mit einer Säure wasserlöslich oder wasserdispergierbar ist, die dadurch gekennzeichnet sind, dass das Copolymerisat einpolymerisiert enthält.

A) 6 bis 22 Gew.-% mindestens einer olefinisch ungesättigten Verbindung, die eine tertiäre Aminogruppe enthält,

B) 21 bis 40 Gew.-% eines mit einem CH-, OH- oder NH-aciden Verkappungsmittel verkappten N(1-alkenyl)-isocyanats,

C) 0 bis 35 Gew.-% einer oder mehrerer copolymerisierbarer olefinisch ungesättigter Verbindungen mit gegenüber Isocyanatgruppen reaktiven Wasserstoffatomen und

D) 3 bis 73 Gew.-% einer oder mehrerer unter (A) bis (C) nicht genannter copolymerisierbarer olefinisch ungesättigter Verbindungen,

mit der Massgabe, dass das Copolymerisat ein mittleres Molekulargewicht zwischen 1000 und 20.000 aufweist und die Summe der unter (A) bis (D) genannten Prozentzahlen 100 ist.

Der daraus hergestellte Elektrotauchlack enthält im allgemeinen 7 bis 20 Gewichtsprozent des protonierten erfindungsgemässen Copolymerisats.

Zu den Aufbaukomponenten des erfindungsgemässen Lackbindemittels ist im einzelnen folgendes auszuführen:

(A) Als Komponente (A) kommen äthylenisch ungesättigte Verbindungen mit einer tertiären Aminogruppe in Betracht, wie Dialkylaminoalkyl(meth)-acrylate mit 1 bis 8 Kohlenstoffatomen in den Alkylgruppen, wie tertiäre Amino(meth)acrylester z.B. N,N-Dimethylaminoäthylmethacrylat, N,N-Diäthylaminoäthylacrylat, oder tertiäre Amino(meth)acrylamide, wie N,N-Dimethylaminopropyl-(meth)acrylamid und N,N-Diäthylaminopropyl(meth)acrylamid.

Komponente (A) ist im erfindungsgemässen Lackbindemittel in Mengen von 6 bis 22, vorzugsweise 6–15 Gew.-% einpolymerisiert. Besonders bevorzugt sind 6 bis 10 Teile der genannten Amino(meth)acrylamide.

B) Die Komponente (B) ist ein Addukt aus einem N(1-alkenyl)-isocyanat und einem CH-, OH- oder NH-aciden Verkappungsmittel. Geeignete N(1-alkenyl)-isocyanate sind solche mit 2 bis 4 Kohlenstoffatomen in der Alkenylgruppe, vorzugsweise Vinylisocyanat und/oder Propenylisocyanat. Als Verkappungsmittel zur Herstellung der Komponente (B) können beispielsweise Monophenole wie Phenol, Kresol, Trimethylphenol, primäre Alkohole oder sekundäre Alkohole wie Isopropanol oder Cyclohexanol, tertiäre Alkohole, wie t-Butanol, t-Amylalkohol, leicht enolisierbare Verbindungen, wie Acetessigester, Acetylaceton, Malonsäurederivate wie Malonsäurediester mit 1–8 Kohlenstoffatomen in der Alkoholkomponente, Malonsäuredinitril, sekundäre aromatische Amine wie N-Methylanilin, N-Methyltoluidin, N-Phenyltoluidin, Imide wie Succinimid oder Phthalimid, Lactame wie ε-Caprolactam, δ-Valerolactam, Laurinlactam, sowie Oxime, wie Acetonoxim, Butanonoxim und Cyclohexanonoxim eingesetzt werden. Besonders bevorzugt als Verkappungsmittel der N(1-alkenyl)-isocyanate sind t-Butanol, Cyclohexanol udn Caprolactam.

Die Herstellung des verkappten N(1-alkenyl)-isocyanats, wie z.B. des Vinylisocyanats kann z.B. nach einer Analogievorschrift in Houben-Weyl, Methoden der organischen Chemie, Band 14/2, (1963) Seite 61-70 erfolgen. Sie wird vorzugsweise in Gegenwart von Lösungsmittel durchgeführt. Bei der Umsetzung des N(1-alkenyl)-isocyanats (Vinylisocyanats) mit dem Verkappungsmittel werden etwa äquimolare Mengen eingesetzt. Ein Überschuss des Isocyanats ist zu vermeiden, da dies später zu Vernetzungen Anlass geben könnte. Komponente (B) ist in einer Menge von 21 bis 40, vorzugsweise 25 bis 33 Gew.-% im erfindungsgemässen Copolymerisat einpolymerisiert.

(C) Als reaktive Monomere (C) kommen solche copolymerisierbaren olefinisch ungesättigten Verbindungen in Frage, die gegenüber Isocyanatgruppen reaktive Wasserstoffatome enthalten, die also beispielsweise OH-oder NH-Gruppen tragen. Beispiele dafür sind Monoester der Acryl- oder Methacrylsäure mit mehrwertigen, insbesondere zweiwertigen Alkoholen, wie Hydroxyäthyl- oder Hydroxypropyl(meth)acrylat und Butandiolmonoacrylat oder Monoester der genannten Säuren mit Polyätherdiolen, wie Polypropylenglykol-(meth)acrylat, sowie Allylalkohol und 1-Butendiol-(3,4). Des weiteren kann N-Methylol(meth)acrylamid verwendet werden. Besonders bevorzugt sind die Ester der (Meth)acrylsäure mit Diolen mit 2–4 Kohlenstoffatomen, insbesondere Hydroxypropylacrylat und Hydroxyäthylacrylat.

Komponente (C) ist im erfindungsgemässen Copolymerisat in einer Menge von 0 bis 35, vorzugsweise 20 bis 30 Gewichtsprozent einpolymerisiert.

(D) Als Komponente (D) kommen andere unter (A) bis (C) nicht genannte copolymerisierbare olefinisch ungesättigte Verbindungen in Betracht, wie Ester der Acryl-und Methacrylsäure mit Monoalkoholen, die 1–18, vorzugsweise 1–8 Kohlenstoffatome aufweisen, wie Methylacrylat, Äthylacrylat, Butylacrylat, Äthylhexylacrylat und Methylmethacrylat. Des weiteren kommen alle anderen copolymerisierbaren ungesättigten Verbindungen in Frage, insbesondere Vinylester von Carbonsäuren mit 2 bis 10 Kohlenstoffatomen, wie Vinylacetat, Vinylaromaten, wie Styrol, Acrylnitril und ungesättigte Triglyceride, wie isomerisiertes Leinöl.

Komponente (D) ist im erfindungsgemässen Copolymerisat in einer Menge von 3 bis 73, vorzugsweise 22 bis 49 Gewichtsprozent einpolymerisiert.

Die Herstellung der erfindungsgemässen Copolymeren erfolgt zweckmässigerweise in polaren, keine OH-Gruppen aufweisenden Lösungsmitteln, wie z.B. Äthern, wie Tetrahydrofuran oder Estern, wie Essigester oder n-Butylacetat, in Gegenwart radikalbildender Initiatoren, wie Azobiscarbonsäureamiden, Azobiscarbonsäurenitrilen oder Peroxiden im allgemeinen bei Temperaturen zwischen 50 und 120°C, vorzugsweise zwischen 60 und 90°C, gegebenenfalls in Gegenwart von Reglern wie t-Dodecylmercaptan oder Diisopropylxanthogendisulfid.

Beispiele für besonders bevorzugte Lackbindemittel sind Copolymerisate aus 6 bis 10 Gewichtsprozent N,N-Diäthylaminopropylacryl- oder -methacrylamid, 25 bis 30 Gewichtsprozent mit Caprolactam verkapptem Vinyl- oder Propenylisocyanats, 25 bis 30 Gewichtsprozent Hydroxypropyl- oder Hydroxyäthylacrylat und 20 bis 40 Gewichtsprozent von Monomeren der Komponente D.

Die erfindungsgemässen Copolymerisate sind unvernetzte Produkte mit einem Molgewicht zwischen 1000 und 20.000, vorzugsweise zwischen 2000 und 10.000 (gemessen mit dem Dampfdruckosmometer). Die K-Werte (nach Fikentscher) (3%ig in Aceton) liegen dementsprechend zwischen 15 und 35, vorzugsweise zwischen 18 und 28.

Die erfindungsgemässen Copolymerisate enthalten tertiäre Aminogruppen, sowie verkappte Isocyanatgruppen und gegebenenfalls gegenüber Isocyanatgruppen reaktionsfähige Strukturen.

Diese Copolymerisate werden erfindungsgemäss als Lackbindemittel verwendet und sind durch zumindest teilweise Salzbildung mit Säuren wasserlöslich bzw. wasserdispergierbar.

Die Copolymerisate werden dazu zumindest teilweise mit Säuren neutralisiert. Als Neutralisationsmittel können organische und anorganische Säuren dienen. Bevorzugt sind Essigsäure, Milchsäure und Gluconsäure. Der Neutralisationsgrad für die Anwendung der erfindungsgemässen Lackbindemittel in wässrigem Medium liegt zwischen 10 und 100%.

Ausser dem erfindungsgemässen Bindemittel kann der Lack polyfunktionelle Vernetzungsmittel, wie hydroxylgruppenhaltige Polymere, Polyester oder Polyadditionsverbindungen, sowie Pigmente wie z. B. Titandioxid, Talkum und Russ je nach Anwendungszweck in Mengen von 10 bis 60, vorzugsweise 20 bis 50 Gewichtsteilen, bezogen auf 100 Gewichtsteile Bindemittel enthalten. Darüber hinaus können anorganische und organische Buntpigmente in Mengen von bis zu 5 Gewichtsteilen sowie Füllstoffe in Mengen von ebenfalls bis zu 5 Gewichtsteilen enthalten sein. Verlaufsmittel können bis zu 10 Teilen, Wachse zur Erhöhung der Kratzfestigkeit bis zu 10 Teilen und Katalysatoren für die Entkappungsreaktion bis zu 3 Teilen, jeweils bezogen auf 100 Teile Bindemittel vorhanden sein.

Die erfindungsgemässen Lackbindemittel werden insbesondere für die kathodische Elektrotauchlackierung verwendet, und zwar als selbstvernetzendes Bindemittel oder auch als fremdvernetzendes Bindemittel.

Mit den erfindungsgemässen Elektrotauchlacken lassen sich vor allem metallische Gegenstände, z. B. aus Eisen, Stahl und Aluminium beschichten.

Die Herstellung der kationischen Elektrotauchbäder erfolgt wie üblich, beispielsweise wie in W. Machu, Elektrotauchlackierung (1974) S. 155 f. beschrieben. Der Feststoffgehalt der Elektrotauchbäder liegt im allgemeinen zwischen 7 und 15 Gewichtsprozent, der pH-Wert zwischen 4,0 und 7,5.

Die mit dem erfindungsgemässen Bindemittel erhaltenen Überzüge weisen eine hohe Härte auf, sind elastisch und sehr chemikalienbeständig, insbesondere gegen Aceton.

Die in den Beispielen genannten Teile und Prozente sind, soweit nicht anders angegeben, Gewichtsteile bzw. Gewichtsprozente.

Herstellung der Komponente (B)

(B 1) N-Vinylcarbaminsäure-tert.-Butylester:
In einem Reaktionsgefäss, versehen mit einem Intensivkühler (mit Kühlsole), Rührer, Thermometer und Zulaufgefäss werden 69 Teile Vinylisocyanat und 70 Teile Äthylacetat vorgelegt. Bei 40°C werden innerhalb von 1 Stunde 74 Teile tert.-Butanol, 73 Teile Äthylacetat und 0,01% Dibutylzinndilaurat zugegeben. Anschliessend lässt man noch 10 Stunden bei 40°C nachreagieren. Es entsteht eine hellgelbe klare Lösung. Isocyanatgehalt (verkappt): 14,7%.

(B 2) Vinylisocyanat-ε-Caprolactam-Addukt:
In einem Reaktionsprodukt werden 113 Teile ε-Caprolactam und 91 Teile Äthylacetat (+0,015% Dibutylzinndilaurat) vorgelegt und auf ca. 50°C aufgeheizt. Dazu wird innerhalb von 1 Stunde eine Mischung aus 69 Teilen Vinylisocyanat und 91 Teilen Äthylacetat zugetropft. Nachreaktionszeit: 5 Stunden. Man erhält eine hellgelbe klare Lösung. Isocyanat-Gehalt (verkappt): 11,5%.

Beispiel 1

In einem mit Rührer, Rückflusskühler und Innenthermometer ausgestatteten Reaktionsgefäss werden 43 Teile Essigester vorgelegt. Die Vorlage wird unter Stickstoff auf 70°C erhitzt. Der Zulauf, bestehend aus 54,2 Teilen der Lösung des verkappten Isocyanats (B 3), 25 Teile 2-Hydroxypropylacrylat, 10 Teile Styrol, 30 Teilen i-Butylacrylat, 6 Teile N,N-Dimethylaminopropylmethacrylamid, 2 Teilen Azobisisobutyronitril und 0,5 Teilen t-Dodecylmerkaptan, wird während drei Stunden bei 70°C zugegeben. Es wird 1 Stunde lang bei 70°C nachpolymerisiert und dann dreimal je 1 Teil Azobisisobutyronitril zudosiert und 1 Stunde nachpolymerisiert. Man erhält eine klare Lösung eines Harzes mit einem K-Wert von 24 und einem Feststoffgehalt von 64,5%.

Elektrotauchlack:
Das Polymerisat wird zu 60% mit Essigsäure neutralisiert. Mit vollentsalztem Wasser wird eine 10%ige Dispersion hergestellt. Damit werden als Kathode geschaltete phosphatierte Bleche bei einer Spannung von 200 V und einer Abscheidezeit von 2 min lackiert. Die Überzüge werden 30 min bei 160°C eingebrannt. Man erhält einen 12 μm dicken acetonbeständigen Lacküberzug mit einer Pendelhärte von 164 sec (DIN 53 157) und einer Erichsen-Tiefung von 8,5 mm (DIN 53 156), der nach 96 Stunden Salzsprühtest nach ASTM-B 117/64 16 mm Unterrostung aufweist.

Beispiel 2

Wie in Beispiel 1 beschrieben, wird ein Polymerisat bestehend aus 25 Teilen der Lösung des verkappten Isocyanats (B 1), 25 Teilen Butandiolmonoacrylat, 10 Teilen N,N-Dimethylaminopropylmethacrylamid, 30 Teilen iso-Butylacrylat und 10 Teilen Styrol hergestellt. Die Polymerlösung hat einen K-Wert von 26 und einen Feststoffgehalt von 59,6%.

Elektrotauchlack:
Das Polymerisat wird mit 2% Dibutylzinndilaurat versetzt und zu 30% mit Essigsäure neutralisiert. Mit vollentsalztem Wasser wird eine 10%ige Dispersion hergestellt. Damit werden als Kathode geschaltete phosphatierte Bleche bei 70 V Abscheidespannung während 2 min beschichtet. Der Lack wird 30 min bei 190°C eingebrannt. Man erhält einen 21 μm dicken acetonbeständigen Film mit einer Pendelhärte von 154 sec und einer Erichsen-Tiefung von 5 mm, der nach 96 Stunden Salzsprühtest eine Unterrostung von 20 mm aufweist.

Pigmentierter Elektrotauchlack:
Das Polymerisat wird mit 2% Dibutylzinndilaurat versetzt und zu 40% mit Essigsäure neutralisiert. Es kommen an Pigmenten 7 Teile Titandioxid von Rutiltyp, 10 Teile Talkum, 12 Teile Zinksulfid und 2,6 Teile Russ hinzu. Mit vollentsalztem Wasser wird eine 15%ige Dispersion hergestellt. Damit werden phosphatierte Bleche bei 100 V Abscheidespannung während 2 min kathodisch beschichtet. Man erhält einen 13 μm dicken acetonfesten Film mit einer Pendelhärte von 120 sec und einer Erichsen-Tiefung von 5,0 mm, der nach 48 Stunden Salzsprühtest eine Unterrostung von 20 mm aufweist.

Beispiel 3

Wie in Beispiel 1 beschrieben, wird ein Polymerisat bestehend aus 40 Teilen der Lösung des verkappten Isocyanats (B 2), 35 Teilen Hydroxyäthylmethacrylat, 15 Teilen 2-Äthylhexylacrylat und 10 Teilen N,N-Dimethylaminopropylmethacrylamid hergestellt. Die Polymerlösung hat einen Feststoffgehalt von 51% und einen K-Wert von 20.

Elektrotauchlack:

Das Polymerisat wird mit 2% Dibutylzinndilaurat versetzt und zu 30% mit Essigsäure neutralisiert. Aus der 10%igen wässrigen Dispersion werden bei 150 V als Kathode geschaltete phosphatierte Bleche beschichtet. Die Abscheidezeit beträgt 2 min. Der Lack wird 30 min bei 190°C eingebrannt. Man erhält einen 22 μm dicken acetonbeständigen Film mit einer Pendelhärte von 146 sec und einer Erichsen-Tiefung von 7 mm, der nach 70 Stunden Salzsprühtest eine Unterrostung von 20 mm aufweist.

Beispiel 4

Wie in Beispiel 1 beschrieben, wird ein Polymerisat bestehend aus 33 Teilen der Lösung des verkappten Isocyanats (B 3), 29 Teilen Hydroxyäthylacrylat, 9 Teilen N,N-Dimethylaminoäthylacrylat und 29 Teilen 2-Äthylhexylacrylat hergestellt. Die Polymerlösung hat einen Feststoffgehalt von 60% und einen K-Wert von 25.

Elektrotauchlack:

Das Polymerisat wird zu 50% mit Essigsäure neutralisiert. Aus der 10%igen wässrigen Dispersion werden bei 50 V als Kathode geschaltete phosphatierte Bleche beschichtet. Die Abscheidezeit beträgt 2 min. Der Lack wird 30 min bei 170°C eingebrannt. Man erhält einen 18 μm dikken acetonbeständigen Film mit einer Pendelhärte von 160 sec und einer E-Tiefung von 0,5 mm, der nach 90 Stunden Salzsprühtest eine Unterrostung von 20 mm aufweist.

Beispiel 5

Wie in Beispiel 1 beschrieben, wird ein Polymerisat bestehend aus 25 Teilen der Lösung des verkappten Isocyanats (B 2), 25 Teilen Hydroxyäthylacrylat, 20 Teilen N,N-Dimethylaminopropylmethacrylamid, 10 Teilen Styrol und 20 Teilen 2--Äthylhexylacrylat hergestellt. Als Initiator wird 2,2'-Azobis(2,4-dimethylvaleronitril) verwendet. Die Polymerlösung hat einen Feststoffgehalt von 59% und einen K-Wert von 20,6.

Elektrotauchlack:

Das Polymerisat wird mit 2% Dibutylzinndilaurat versetzt und zu 20% mit Essigsäure neutralisiert. Aus der 10%igen wässrigen Dispersion werden bei 100 V während 2 min Abscheidezeit phosphatierte Bleche kathodisch beschichtet. Der Lack wird 30 min bei 220°C eingebrannt. Man erhält einen 19 μm dicken acetonbeständigen Film mit einer Pendelhärte von 160 sec und einer Erichsen-Tiefung von 6,5 mm, der nach 96 Stunden Salzsprühtest eine Unterrostung von 20 mm aufweist.

Vergleichsbeispiel

Es wird ein Polymer gemäss US-A-3 883 483, Example I hergestellt. Das Polymer wird mit 2% Dibutylzinndilaurat versetzt und zu 100% mit Gluconsäure neutralisiert. Aus der 10%igen wässrigen Dispersion werden bei 200 V während 90 sec Abscheidezeit phosphatierte Bleche beschichtet.

Der Lack wird 30 min bei 200°C eingebrannt. Man erhält einen 14 μm dicken Lack, der nicht acetonfest ist, eine Pendelhärte von 100 sec und eine E-Tiefung von 10 mm aufweist. Nach 48 Stunden Salzsprühtest beträgt die Unterrostung schon mehr als 20 mm.

**Patentansprüche**

1. Lackbindemittel auf Basis eines tertiäre Aminogruppen und verkappte Isocyanatgruppen enthaltenden Copolymerisats, das durch zumindest teilweise Salzbildung mit einer Säure wasserlöslich oder wasserdispergierbar ist, dadurch gekennzeichnet, dass das Copolymerisat einpolymerisiert enthält

A) 6 bis 22 Gew.-% mindestens einer olefinisch ungesättigten Verbindung, die eine tertiäre Aminogruppe enthält,

B) 21 bis 40 Gew.-% eines mit einem CH-, OH- oder NH-aciden Verkappungsmittel verkappten N(1-alkenyl)-isocyanats,

C) 0 bis 35 Gew.-% einer oder mehrerer copoylmerisierbarer olefinisch ungesättigter Verbindungen mit gegenüber Isocyanatgruppen reaktiven Wasserstoffatomen und

D) 3 bis 73 Gew.-% einer oder mehrerer unter A) bis C) nicht genannter copolymerisierbarer olefinisch ungesättigter Verbindungen, mit der Massgabe, dass das Copolymerisat ein mittleres Molekulargewicht zwischen 1000 und 20 000 aufweist und die Summe der unter (A) bis (D) genannten Prozentzahlen 100 ist.

2. Lackbindemittel nach Anspruch 1, dadurch gekennzeichnet, dass als Komponente (B) ein Addukt aus Vinylisocyanat oder Propenylisocyanat und Cyclohexanol, tert.-Butanol oder ε-Caprolactam im Molverhältnis Isocyanat/Verkappungsmittel von 1:1 verwendet wird.

3. Lackbindemittel nach Anspruch 1 oder 2, dadurch gekennzeichnet, dass das Äquivalenzverhältnis der reaktiven Wasserstoffatome der Komponente (C) zu den verkappten Isocyanatgruppen der Komponente (B) etwa 1:1 beträgt.

4. Verwendung des Lackbindemittels nach einem der vorhergehenden Ansprüche als selbstvernetzendes Bindemittel für die kathodische Elektrotauchlackierung metallischer Gegenstände.

5. Verwendung des Lackbindemittels nach Anspruch 1 in Kombination mit einem polyfunktionellen Vernetzungsmittel als fremdvernetzendes Bindemittel für die kathodische Elektrotauchlackierung metallischer Gegenstände.

**Claims**

1. A surface-coating binder based on a copolymer which contains tertiary amino groups and blocked isocyanate groups and is water-soluble or water-dispersible as a result of being at least partially salified with an acid, characterized in that the copolymer contains, as copolymerized units,

(A) from 6 to 22% by weight of at least one olefinically unsaturated compound containing a tertiary amino group,

(B) from 21 to 40% by weight of an N-(alk-1-enyl)-isocyanate blocked with a CH-, OH- or NH-acidic blocking agent,

(C) from 0 to 35% weight of at least one copolymerizable olefinically unsaturated compound possessing hydrogen atoms which are reactive towards isocyanate groups and

(D) from 3 to 73% by weight of at least one copolymerizable olefinically unsaturated compound not mentioned under (A) or (C),

with the proviso that the copolymer has a mean molecular weight of from 1,000 to 20,000 and the percentages of (A) to (D) total 100.

2. A surface-coating binder as claimed in claim 1, characterized in that an adduct of vinyl isocyanate or propenyl isocyanate and cyclohexanol, tert.-butanol or ε-caprolactam in the molar ratio isocyanate/blocking agent of 1:1 is used as component (B).

3. A surface-coating binder as claimed in claim 1 or 2, characterized in that the ratio of equivalents of reactive hydrogen atoms of component (C) to equivalents of blocked isocyanate groups of component (B) is about 1:1.

4. Use of a surface-coating binder as claimed in any of the preceding claims as self-crosslinking binder for the cathodic electrocoating of metallic articles.

5. Use of a surface-coating binder as claimed in claim 1 in combination with a polyfunctional crosslinking agent as binder, requiring a added crosslinking agent, for the cathodic electrocoating of metallic articles.

**Revendications**

1. Liant pour vernis, à base d'un copolymère contenant des groupes amino tertiaires et des groupes isocyanate masqués et qui, par salification au moins partielle avec un acide, est soluble dans l'eau ou dispersable dans l'eau, caractérisé par le fait que le polymère contient en polymérisation

A) 6 à 22% en poids d'au moins un composé à insaturation oléfinique, qui contient un groupe amino tertiaire,

B) 21 à 40% en poids d'un N(1-al-cenyl)-isocyanate masqué par un agent de masquage CH-, OH- ou NH-acide,

C) 0 à 35% en poids d'un ou plusieurs composés à insaturation oléfinique copolymérisables, à atomes d'hydrogène réactifs vis-à-vis des groupes isocyanate,

D) 3 à 73% en poids d'un ou plusieurs composés à insaturation oléfinique, copolymérisable, non indiqués sous A) à C),

sous réserve que le copolymère ait un poids moléculaire compris entre 1000 et 20000 et que la somme des pourcentages indiqués sous A) à D) soit égale à 100.

2. Liant pour vernis selon la revendication 1, caractérisé par le fait que l'on utilise, comme composant (B), un produit d'addition d'isocyanate de vinyle ou d'isocyanate de propényle et de cyclohexanol, tert.-butanol ou ε-caprolactame en rapport molaire, isocyanate/agent de masquage, de 1/1.

3. Liant pour vernis selon la revendication 1 ou 2, caractérisé par le fait que le rapport d'équivalence entre les atomes d'hydrogène réactifs du composant (C) et les groupes isocyanate masqués du composant (B) est d'environ 1/1.

4. Utilisation du liant pour vernis selon l'une des revendications précédentes, comme liant autoréticulant pour la peinture par électrodéposition cathodique (cathaphorèse) d'objets métalliques.

5. Utilisation du liant selon la revendiction 1 en combinaison avec un agent de réticulation polyfonctionnel, comme liant réticulant étranger pour la peinture par électrodéposition cathodique (cathaphorèse) d'objets métalliques.